# EUROPÄISCHE PATENTSCHRIFT

(11) **EP 0 438 999 B1**
(45) Veröffentlichungstag und Bekanntmachung des Hinweises auf die Patenterteilung: **24.11.1993**
(21) Anmeldenummer: 90890350.3
(22) Anmeldetag: 20.12.1990
(51) Int. Cl.: B60C 27/14, B60C 27/12

(54) **Schneekette für Fahrzeugreifen**
Snow chain for vehicle tyre
Chaîne à neige pour pneu de véhicule

(30) Priorität: 26.01.1990 AT 178/90
(43) Veröffentlichungstag der Anmeldung: 31.07.1991
(73) Patentinhaber: Glinzner, Wilhelm, A-1190 Wien (AT); Dietl, Ernst, A-3224 Mitterbach (AT)
(72) Erfinder: Glinzner, Wilhelm, A-1190 Wien (AT); Dietl, Ernst, A-3224 Mitterbach (AT)
(74) Vertreter: Müllner, Erwin, Dr.

(56) Entgegenhaltungen:
- EP-A- 0 088 043
- EP-A- 0 125 676
- DE-A- 3 307 803
- DE-C- 684 557
- GB-A- 219 200
- LU-A- 56 685
- US-A- 2 537 392

## Beschreibung

Die Erfindung betrifft eine Schneekette für Fahrzeugreifen mit einer relativ zum Fahrzeug am Reifen innen liegenden und einer außen liegenden Halterung und mit Querketten, welche die beiden Halterungen über die Lauffläche des Reifens hinweg verbinden sowie mit mindestens einer Spannkette, die den Durchmesser einer der Halterungen bis zum satten Anliegen der Schneekette an dem Reifen verkleinert. Eine gattungsbildende Konstruktion ist zum Beispiel aus der DE-A- 3 307 803 bekannt.

Bei der Montage der bekannten Schneeketten wird die innen liegende, infolge des Aufziehens auf den Reifen offene Halterung zu einer geschlossenen Einheit verbunden und die äußere Halterung, an der die Spannkette zumeist angreift, wird zusammengezogen, sodaß sich die Kette eng an den Reifen anlegt. Darüber hinaus sind Ausführungen bekannt, die radiale Bügel aufweisen, welche die Lauffläche übergreifen und zwischen denen die Kette angeordnet ist. Bei einer Variante sind diese Bügel fächerartig um das Rad herum schwenkbar und sodann mit Hilfe einer Spanneinrichtung arretierbar. Ferner zählen Schneeketten zum Stand der Technik, die starre Bügel oder Bogenstücke umfassen, welche gelenkig miteinander verbunden sind und Teile der am Rad innen liegenden bzw. außen liegenden Halterungen darstellen. Diese Schneeketten sind leichter handzuhaben, weil das Anlegen durch die Bogenstücke, die unterschiedlich lackiert sein können, übersichtlicher ist und die Kette rascher entwirrt werden kann.

Die Erfindung zielt darauf ab, das Aufziehen einer Schneekette weiter zu erleichtern. Dies wird bei einer Schneekette der eingangs beschriebenen Art dadurch erreicht, daß die Spannkette zum Schließen der inneren Halterung und zum Zusammenziehen in radialer Richtung,entlang der inneren Halterung geführt und mit dieser über Ösen, Hülsen, Ringe oder dergleichen, die über den gesamten Umfang der inneren Halterung verteilt sind, gleitend verbunden ist und daß die Spannkette über die Lauffläche des Reifens nach außen geführt und an der äußeren Halterung spannbar eingehängt ist. Im Gegensatz zu bisherigen Ausführungen erfolgt das Spannen der Kette nicht an der Radaußenseite, sondern an der Innenseite. Die Spannkette zieht nicht nur die Enden der inneren Halterung zusammen, sondern verkleinert auch den Durchmesser der inneren Halterung, sodaß sich die Kette fest an den Reifen anliegt. Das Anziehen der Spannkette erfolgt von der Radaußenseite. Ein Zusammenhängen der Kette an der Innenseite entfällt. Dabei ist es zweckmäßig, wenn die innere Halterung als eine, die über die Lauffläche geführten Querketten verbindende, einer offenen Kreislinie längs der Reifeninnenwand folgende, Verbindungskette ausgebildet ist. Zum Aufziehen der Kette auf ein Rad ist es vorteilhaft, wenn die Verbindungskette über etwa ein Viertel des Umfanges offen ist und wenn dieser Bereich durch die längs der Verbindungskette geführte und in ihrer Länge verstellbare Spannkette überbrückt ist, wobei die Spannkette mit der Verbindungskette im Bereich der Querketten in Umfangsrichtung frei gleitend verbunden ist. Damit zieht man die Enden der Verbindungskette zusammen und übt eine radial nach innen gerichtete Kraftkomponente aus. Dabei wirkt die Kraftkomponente unmittelbar auf die Querketten, da die Spannkette mit der Verbindungskette im Bereich der Querketten gleitend verbunden ist. Auch dort, wo die Verbindungskette offen ist, kann eine Querkette vorgesehen sein. Diese greift dann unmittelbar an der Spannkette an. Eine besondere Ausführungsform ist dadurch gekennzeichnet, daß die Spannkette, dem offenen Bereich der Verbindungskette gegenüberliegend, mit ihren beiden Enden durch Gleitführungen der Verbindungskette durchgreift, daß die Enden über die Lauffläche geführt und überkreuzt sind und an der außen liegenden Halterung Gleitführungen, z.B. Ringe oder Hülsen vorgesehen sind, durch welche die Enden der Spannkette geführt und an der Halterung, vorzugsweise unter Zwischenschaltung von Federn spannbar befestigt sind. Durch Anziehen an den Enden der Spannkette verkürzt sich die wirksame Spannkettenlänge und schrumpft infolge der Führungen und Ösen sowie der konstruktiven Ausbildung die Kette auf das Rad auf. Dabei ist es zweckmäßig, wenn die äußere Halterung als starrer, geschlossener Ring ausgebildet ist, an dem die Querketten fixiert sind, wenn in dem Ring ein vorzugsweise halbkreisförmiger Bügel in diametral liegenden Drehlagern in und aus der Ebene des Ringes ein- bzw. ausschwenkbar gelagert ist und wenn an dem Bügel die Spannkettenenden bzw. deren Spannfedern angreifen, die durch die Gleitführungen laufen, welche am Ring dem Bügel gegenüberliegend montiert sind. Diese Spanneinrichtung gestattet das Spannen der Spannkette mit sehr geringem Kraftaufwand. Die Federn ziehen die,im Bereich der Standfläche des Reifens vorgesehene, Querkette mittels der Spannkette über die Lauffläche, sobald sich das Fahrzeug in Bewegung setzt. Der Bügel ist in der eingeschwenkten Stellung (Spannstellung) durch einen Schnapper verriegelbar.

Diese Schneekette hebt sich von anderen Ketten insbesondere dadurch ab, daß der starre Ring an der Außenseite des Rades angebracht ist, wo er jederzeit problemlos anzulegen und zu entfernen ist. Die radinnere Halterung ist größenverstellbar und beweglich ausgeführt, da die Spannkette von der Radinnenseite über die Lauffläche nach außen gelenkt wird, wo sie über die Spannvorrichtung mit der äußeren Halterung verbunden ist. Die Größenverstellbarkeit ist notwendig, damit die radinnere Halterung beim Auflegen wie eine Schlaufe teilweise über das Rad gestülpt werden kann, und wird mit den in Ösen gleitenden Spannketten erreicht. Der dem vollständigen Anbringen der Halterung an der radinneren Seite entgegenstehende Widerstand durch die Reifenstandfläche wird durch Verengen der Spannkettenschlaufe mit Hilfe der Spannvorrichtung nach einer Viertelumdrehung des Rades überwunden. Die Ausbildung der Spannvorrichtung ist so vorzusehen, daß einerseits die an dieser Spannvorrichtung fix befestigte Spannkette ausreichend für das Auflegen geöffnet werden kann und anderseits für den Betriebszustand eine genügende Spannung der Kette erreicht wird. Die Schneekette ist nach dem Auflegen und anschließendem Schließen des Spannbügels betriebsbereit, eine weitere Manipulation ist im Normalfall nicht mehr notwendig.

Ein Ausführungsbeispiel der Schneekette ist in den Zeichnungen schematisch dargestellt. Fig. 1 zeigt ein Rad mit Schneekette von der Außenseite, Fig. 2 von der Innenseite des Rades und die Fig. 3 bis 14 zeigen das Rad während der Montage jeweils in Frontansicht, von unten, von der Hinterseite und in Laufrichtung.

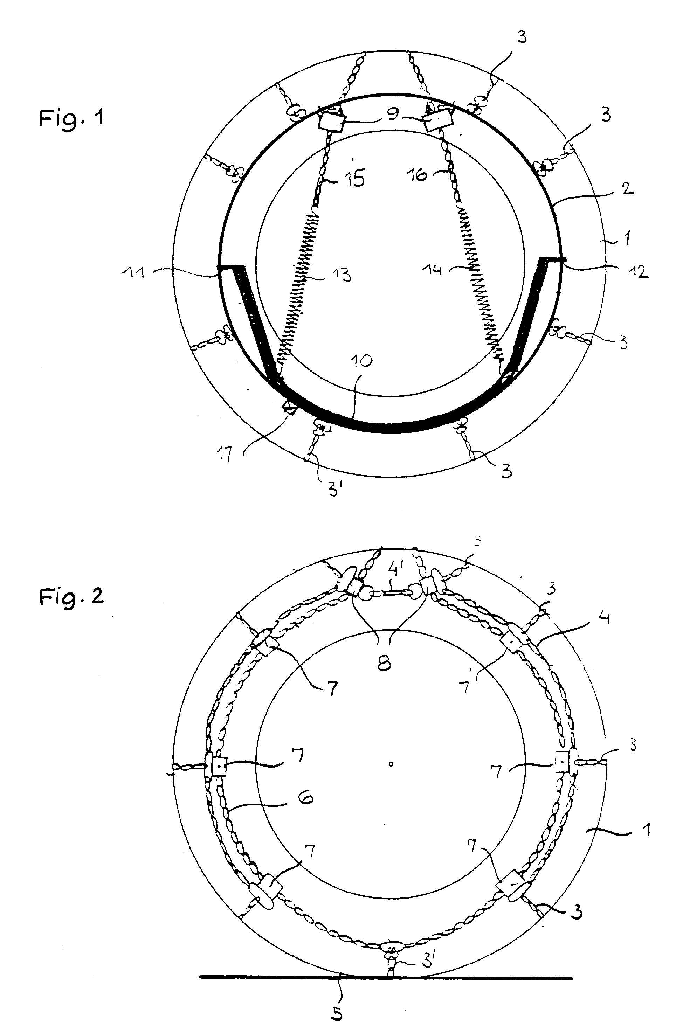

Gemäß Fig. 1 und 2 ist auf der Außenseite eines Rades 1 als Teil einer Schneekette ein starrer Ring 2 vorgesehen, an dem eine Anzahl von Querketten 3 befestigt sind, die über die Lauffläche des Rades zu einer Verbindungskette 4 an der Radinnenseite laufen. Während der Ring 2 vollständig geschlossen ist, umfängt die Verbindungskette 4 einschließlich des Verbindungsstückes 4' das Rad 1 nur zu etwa drei Viertel. Wie Fig. 2 zeigt, endet die Verbindungskette 4 vor dem Bereich der Standfläche 5 des Rades 1.

Eine Spannkette 6 (Fig. 2) ist durch Ösen 7 geführt, welche an der Verbindungskette 4 befestigt sind. Die Spannkette 6 bildet gemäß Fig. 2 eine Schlaufe, deren Enden durch die Ösen 8 über die Lauffläche des Rades 1 hinweg überkreuzt und durch Gleitführungen 9 (Fig. 1) der Vorderseite gefädelt sind. Die Gleitführungen 9 sind als Hülsen ausgebildet, die auf dem starren Ring 2 um jeweils zur Radachse parallele Achsen drehbar gelagert sind. Auf dem Ring 2 ist ferner ein etwa halbkreisförmiger Bügel 10 in diametral angeordneten Drehlagern 11, 12 in die Ebene des Ringes 2 ein- und aus dieser ausschwenkbar. Dieser Bügel 10 bildet zusammen mit Federn 13, 14,die an den Bügel 10 angreifen und mit ihren anderen Enden an den Enden 15, 16 der Spannkette 6 befestigt sind, die Spanneinrichtung. Durch Hochklappen des Bügels 10 aus der Zeichenebene werden die Federn 13, 14 entspannt und die Spannkette entlastet. In der in Fig. 1 dargestellten Spannstellung ist der Bügel 10 mit dem Ring 2 durch einen gegen Federkraft zurückziehbaren Schnapper 17 (nur symbolisch dargestellt) verriegelt. In dieser Spannstellung wirkt eine Zugkraft auf die beiden Enden 15, 16 der Spannkette 6, die ein Straffen der Spannkettenschlaufe in Fig. 2 und eine radial zur Drehachse gerichtete Kraftkomponente auf die Querketten 3 zur Folge hat. Die Querkette 3', die im Bereich der Öffnung der Verbindungskette 4 angeordnet ist, greift auf der Innenseite direkt an der Spannkette 6 an. Da das Rad 1 während der Montage der Kette mit der Standfläche 5 auf der Straße aufsteht, kann die Querkette 3' noch nicht über die Lauffläche des Rades 1 hinweg auf die Radinnenseite gezogen werden. Sobald angefahren wird und das Rad eine Vierteldrehung ausführt, zieht die Spannkette 6 die Querkette 3' über die Lauffläche in die Endposition (gemäß Fig. 2).

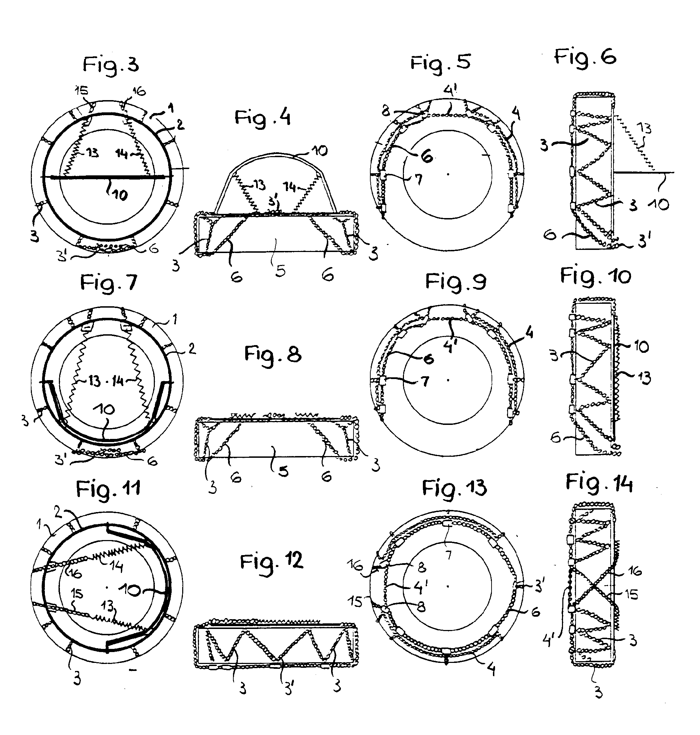

Wie die Montage vor sich geht, zeigen die Fig. 3 bis 14:

Der Ring 2 wird kurz in der gezeichneten Position gehalten und die Querketten 3, die Verbindungskette 4 und die Schlaufe der Spannkette 6 werden hinter das Rad 1 gelegt. Infolge des Ringes 2 ordnen sich die Kettenteile von selbst. Der Spannbügel 10 (Fig. 3) ist ausgeschwenkt; die Spannkette 6 und die Federn 13, 14 sind entspannt. Jene Teile der Kette, nämlich die Querkette 3' und ein kurzes Stück der Schlaufe der Spannkette 6 liegen vor dem Rad 1 auf dem Boden. Fig. 4 zeigt eine Ansicht von unten, auf die Standfläche 5. Man erkennt den ausgeklappten Bügel 10. Die Situation ist besonders anschaulich in Fig. 6 zu sehen. Gemäß Fig. 5 hängen die Kettenteile an der Radinnenseite geordnet, jedoch locker herunter.

Erst durch Einklappen des Bügels 10, der die Funktion eines Strammers hat, spannen sich die einzelnen Abschnitte der Kette. Dies geht aus Fig. 7 bis 10 hervor. Fig. 10 zeigt insbesondere, daß die Querkette 3' infolge der Bodenberührung des Rades 1 auch in dieser Spannstellung noch immer vor dem Rad 1 liegt.

Erst bei einer Vierteldrehung des Rades 1, etwa beim Anfahren, zieht die Spannkette 6 die Querkette 3' über die Lauffläche des Rades 1. Damit ist gemäß Fig. 11 bis 14 die endgültige Montagelage der Schneekette auf dem Rad 1 erreicht. Fig. 14 zeigt die überkreuzte Lage der Spannkette 6 beim Übergang von der innen liegenden Halterung (Verbindungskette 4) zur außen liegenden Halterung (Ring 2 mit Bügel 10 und Federn 13, 14).

## Patentansprüche

1. Schneekette für Fahrzeugreifen mit einer relativ zum Fahrzeug am Reifen innen liegenden und einer außen liegenden Halterung und mit Querketten (3), welche die beiden Halterungen über die Lauffläche des Reifens hinweg verbinden, sowie mit einer Spannkettenanordnung, welche den Durchmesser einer der Halterungen bis zum satten Anliegen der Schneekette an dem Reifen verkleinert, dadurch gekennzeichnet, daß die Spannkettenanordnung ausschließlich eine einzige Spannkette (6) aufweist, die zum Schließen der inneren Halterung und zum Zusammenziehen in radialer Richtung in einer Schlaufe entlang der inneren Halterung geführt und mit dieser über Ösen (7, 8), Hülsen, Ringe oder dergleichen, die über den gesamten Umfang der inneren Halterung verteilt sind, gleitend verbunden ist und daß die Spannkette (6) mit beiden Enden der Schlaufe über die Lauffläche des Reifens (1) nach außen geführt und an der äußeren Halterung spannbar eingehängt ist.

2. Schneekette nach Anspruch 1, dadurch gekennzeichnet, daß die innere Halterung als eine, die über die Lauffläche geführten Querketten (3) verbindende, einer offenen Kreislinie längs der Reifeninnenwand folgende, Verbindungskette (4) ausgebildet ist.

3. Schneekette nach Anspruch 2, dadurch gekennzeichnet, daß die Verbindungskette (4) über etwa ein Viertel des Umfanges offen ist und daß dieser Bereich durch die längs der Verbindungskette (4) geführte und in ihrer Länge verstellbare Spannkette (6) überbrückt ist, wobei die Spannkette (6) mit der Verbindungskette (4) im Bereich der Querketten (3) in Umfangsrichtung frei gleitend verbunden ist.

4. Schneekette nach Anspruch 3, dadurch gekennzeichnet, daß die Spannkette (6) in dem offenen Bereich der Verbindungskette (4) mit einer Querkette (3' ) verbunden ist.

5. Schneekette nach den Ansprüchen 3 oder 4, dadurch gekennzeichnet, daß die Spannkette (6),dem offenen Bereich der Verbindungskette (4) gegenüberliegend,mit ihren beiden Enden (15, 16) durch Gleitführungen (8) der Verbindungskette (4) durchgreift, daß die Enden (15, 16) über die Lauffläche geführt und überkreuzt sind und an der außen liegenden Halterung Gleitführungen (9), z.B. Ringe oder Hülsen, vorgesehen sind, durch welche die Enden (15, 16) der Spannkette (6) geführt und an der Halterung vorzugsweise unter Zwischenschaltung von Federn (13, 14) spannbar befestigt sind.

6. Schneekette nach einem der Ansprüche 1 bis 5, dadurch gekennzeichnet, daß die äußere Halterung als starrer, geschlossener Ring (2) ausgebildet ist, an dem die Querketten (3, 3') fixiert sind, daß in dem Ring (2) ein vorzugsweise halbkreisförmiger Bügel (10) in diametral liegenden Drehlagern (11, 12) in und aus der Ebene des Ringes (2) ein- bzw. ausschwenkbar gelagert ist und daß an dem Bügel (10) die Spannkettenenden (15, 16) bzw. deren Spannfedern (13, 14) angreifen, die durch die Gleitführungen (9) laufen, welche am Ring (2) dem Bügel (10) in der Spannstellung gegenüberliegend montiert sind.

7. Schneekette nach Anspruch 6, dadurch gekennzeichnet, daß der Bügel (10) in der in die Ebene des Ringes (2) eingeschwenkten Spannstellung verriegelbar ist.

## Claims

1. Snow chain for vehicle tyres, with a support on the inside of the tyre and a support on the outside relative to the vehicle and with transverse chains (3) which connect the two supports across the tread of the tyre, as well as with a tensioning chain assembly which reduces the diameter of one of the supports until the snow chain fits snugly against the tyre, characterised in that the tensioning chain assembly comprises exclusively a single tensioning chain (6) which for closing the inner support and for contraction in a radial direction is guided along the inner support in a loop and connected thereto in sliding relationship by eyes (7, 8), bushes, rings or the like which are distributed over the whole circumference of the inner support, and in that the tensioning chain (6) is guided outwardly by both ends of the loop over the tread of the tyre (1) and suspended tensionably from the outer support.

2. Snow chain according to claim 1, characterised in that the inner support is constructed as a connecting chain (4) which connects the transverse chains (3) guided over the tread and which follows an open circular line along the inner wall of the tyre.

3. Snow chain according to claim 2, characterised in that the connecting chain (4) is open over about one-quarter of the circumference and in that this region is bridged by the tensioning chain (6) which is guided along the connecting chain (4) and adjustable in length, wherein the tensioning chain (6) is connected in a relationship of free sliding in the circumferential direction to the connecting chain (4) in the region of the transverse chains (3).

4. Snow chain according to claim 3, characterised in that the tensioning chain (6) in the open region of the connecting chain (4) is connected to a transverse chain (3').

5. Snow chain according to claim 3 or 4, characterised in that the tensioning chain (6), opposite the open region of the connecting chain (4), passes by both its ends (15, 16) through sliding guides (8) of the connecting chain (4), in that the ends (15, 16) are guided over the tread and crossed over and on the outer support there are provided sliding guides (9), e.g. rings or bushes, through which the ends (15, 16) of the tensioning chain (6) are guided and attached tensionably to the support, preferably through the intermediary of springs (13, 14).

6. Snow chain according to any of claims 1 to 5, characterised in that the outer support is constructed as a rigid, closed ring (2) to which the transverse chains (3, 3') are fixed, in that a preferably semi-circular frame (10) is mounted in the ring (2) in diametrically located pivot bearings (11, 12) so as to be capable of pivoting into and out of the plane of the ring (2), and in that to the frame (10) are applied the tensioning chain ends (15, 16) or the tensioning springs (13, 14) thereof, which pass through the sliding guides (9) which are mounted on the ring (2) opposite the frame (10) in the tensioning position.

7. Snow chain according to claim 6, characterised in that the frame (10) can be locked in the tensioning position pivoted into the plane of the ring (2).

## Revendications

1. Chaîne à neige pour des bandage pneumatiques de véhicule, comprenant une attache disposée sur le bandage pneumatique à l'intérieur par rapport au véhicule et une attache disposée respectivement à l'extérieur et des chaînes transversales (3) qui relient les deux attaches en passant sur le chemin de roulement du bandage pneumatique, ainsi qu'un agencement de chaînes de serrage, qui tend à raccourcir le diamètre de l'une des attaches jusqu'au portage à fond de la chaîne à neige sur le bandage pneumatique, caractérisé en ce que l'agencement de chaînes de serrage comporte exclusivement une seule chaîne de serrage (6), qui, pour fermer l'attache intérieure et assurer la traction d'ensemble, dans la direction radiale est guidée en une boucle le long de l'attache intérieure et est reliée à glissement à cette attache par des oeillets (7, 8), des manchons, des anneaux ou similaires, qui sont répartis sur la totalité de la périphérie de l'attache intérieure, et en ce que la chaîne de serrage (6) est guidée vers l'extérieur par les deux extrémités de la boucle sur la surface de roulement du bandage pneumatique (1) et est accrochée à l'attache extérieure, en étant susceptible d'être tendue.

2. Chaîne à neige selon la revendication 1, caractérisée en ce que l'attache intérieure est réalisé sous la forme d'une chaîne de liaison (4) reliant les chaînes transversales (3) guidées sur la surface de roulement et suivant une ligne circulaire ouverte le long de la paroi intérieure du bandage pneumatique.

3. Chaîne à neige selon la revendication 2, caractérisée en ce que la chaîne de liaison (4) est ouverte sur environ un quart de la périphérie, et en ce que cette zone est court-circuitée par la chaîne de serrage (6) guidée le long de la chaîne de liaison (4) et réglable en longueur, la chaîne de serrage (6) étant reliée librement glissante à la chaîne de liaison 4 dans la direction périphérique, dans la zone des chaînes transversales (3).

4. Chaîne à neige selon la revendication 3, caractérisée en ce que la chaîne de serrage (6) est reliée dans la zone ouverte de la chaîne de liaison (4) à une chaîne transversale (3').

5. Chaîne à neige selon la revendication 3 ou 4, caractérisée en ce que la chaîne de serrage (6) pénètre dans la zone ouverte de la chaîne de liaison (4) opposée, par ses deux extrémités (15, 16) à travers des guidages glissants (8) de la chaîne de liaison (4), en ce que les extrémités (15, 16) sont guidées et croisées sur la surface de roulement, et sont munies sur l'attache disposée à l'extérieur, de guidages de glissement (9), par exemple des anneaux ou des manchons, à l'aide desquels les extrémités (15, 16) de la chaîne de serrage (6) sont guidées et sont fixées à l'attache en étant susceptibles d'être serrées, de préférence par l'intermédiaire de ressorts (13, 14).

6. Chaîne à neige selon l'une des revendications 1 à 5, caractérisée en ce que l'attache extérieure est réalisée sous la forme d'un anneau rigide fermé (2), auquel sont fixées les chaînes transversales (3, 3'), en ce qu'un étrier (10), de préférence de forme semi-circulaire, est monté dans l'anneau (2) dans des paliers de rotation (11, 12) disposés diamétralement, en étant susceptible d'être basculé dans et hors du plan de l'anneau (2) et en ce que les extrémités des chaînes de serrage (15, 16) ou leurs ressorts de traction (13, 14) s'accrochent à ces extrémités passant dans les guidages de glissement (9) qui sont montés sur l'anneau (2) à l'opposé de l'étrier (10) en position de serrage.

7. Chaîne à neige selon la revendication 6, caractérisée en ce que l'étrier (10) est susceptible d'être verrouillé en position de serrage, basculé dans le plan de l'anneau (2).
